# EUROPEAN PATENT SPECIFICATION

(11) **EP 3 996 829 B1**
(45) Date of publication and mention of the grant of the patent: **04.11.2026**
(21) Application number: 20916112.4
(22) Date of filing: 10.03.2020
(51) Int. Cl.: B01D 24/12, B01D 24/46, B01D 36/04, B01D 24/10, C02F 1/00, C02F 103/42, C02F 103/02, B01D 24/40, B01D 24/48, B01D 36/00

(54) **FILTERING SYSTEM**
FILTERSYSTEM
SYSTÈME DE FILTRAGE

(30) Priority: 23.01.2020 TR 202001014
(43) Date of publication of application: 18.05.2022
(73) Proprietor: Pimplast Plastik San. ve Tic. A.S., Gebze, Kocaeli (TR)
(72) Inventor: BULUT, Recep, Çubuk, Ankara (TR)
(74) Representative: Kayahan, Senem
(86) International application number: PCT/TR2020/050191
(87) International publication number: WO 2021/150179

(56) References cited:
- WO-A2-2017/198679
- CN-A- 103 949 095
- CN-U- 203 139 794
- CN-Y- 201 295 554
- GB-A- 2 251 194
- GB-A- 2 461 119
- GB-A- 2 542 837
- KR-A- 20190 052 350

## Description

### Technical Field

lnvention relates to a filtering system used in any pool filtrations, filtration of taps or building entrance hat and cold use water, filtration of city water before osmosis filtering devices, filtration of heating and cooling mechanical plant systems, filtration of cooling water in hydro-electric power plants.

The invention particularly relates to a filtering system forming vortex inside filter by directing and increasing speed of filtered liquid and thus providing decreasing pressure on filter surface and collection of filtered particulates in a chamber and also cleaning of fiiter by reverse flushing without need tor dismantle thereof.

### State of the Art

In the related art, various filtering systems are used tor removal of particulates in the water in swimming and any other pools, pre-filtering operation of water from main source, city water, mechanical installation systems, hydroelectric power plants.

Sand filters are used in pool filtration field. Water of pool is pumped into sand filters by means of circulation pump and after particulates forming in water are filtered, it is given to pool again. However, sand filters can filter water at limited speeds. Sand filters are unable to retain particulates smaller than 20 microns. Also, sand filters contain various materials. They are sand, pine and various materials. Reverse flushing is made by means of giving water from bottom to the filter in order to remove particulates accumulating on polluted filters. Reverse flushing requires excessive amount of water consumption to clean filters.

Filtering is conducted at tap or building inlet tor hat and cold use water from main source. Cartridge filters and dirt trappers are used tor the filtering operation. The cartridge filters used therein are usually single use ones. Filters where reverse flushing is made do not allow very sensitive filtering. Also operating cost of such filters is too high.

Reverse osmosis filter devices are used to remove potential chemical, physical and microbiological pollutants in city water. Reverse osmosis devices pump water at high pressure and make it penetrate through semi-transparent film and thus provide cleaning of water. Cartridges used in reverse osmosis devices are very expensive and single use ones and therefore, operating costs are too high.

Heating and cooling mechanical installation systems produce particulate automatically during use. Dirt retainers and sediment trappers used in the heating and cooling mechanical installation systems retain particulates of big sizes. Particulates of micron size circulate independently in systems. Therefore, such particulates settle in the parts of system where circulating fluid slows down and reduces efficiency of the system and in time blocks the system. They also damage heat switchers and pumps used in the system by wearing them. They also cause blocking in working accessories of the system. Adaptation of bag filters applied in the heating and cooling mechanical installation systems has some disadvantages. üne of the disadvantages is the accumulation of filtered particulates in the filter. Therefore, filter may get blocked too early. Another disadvantage is the need of dismantle of filter tor cleaning. Since the dismantling operation requires continuation, it creates a big issue. Because automatic air discharge device is not applied in the system, it causes air accumulation in filtering container. Pressure loss in close systems cause a big issue too. Far that reason, filter can not be installed directly to system to retain particulates of micron level.

Hydraulic filters commonly used in hydro-electric power plants aim to retain particulates remaining on filter surface by means of flushing system screening filter surface. The hydraulic filters cannot clean particulates sticking onto filter surface such as leaf, paper and bags and system stops. Dismantling and cleaning of the filters also cause high labour cost and time loss.

GB2461119 discloses a water filter consisting of a sealed cylindrical vessel which in use has one or more water inlets at the top and at least one outlet at the bottom and between the inlet and outlet are one or more layers of filter media where at least one inlet is adapted to discharge water into the vessel so that in use the flow of water into the vessel causes water within the vessel to rotate about the vertical axis of the vessel.

GB2542837discloses a water filter comprises a vessel which comprises multiple layers of particulate filter media and a velocity adjuster which defines cross-sectional area for flow of water.

As a result, the because of existence the said problems mentioned above and inadequacy of solutions, it has been necessary to make a development in the related art.

### Aim of the Invention

This present invention relates to a filtering system eliminating above mentioned disadvantages and providing new advantages in the related art.

Primary purpose of the invention is to provide forming vortex inside filter by directing and increasing speed of filtered liquid and thus providing decreasing pressure on filter surface and collection of filtered particulates in a chamber and also cleaning of fiiter by reverse flushing without need tor dismantle thereof.

Primary purpose of the invention is to provide long time use of filter without cleaning by means of forming vortex inside filter and accumulation of filtered particulates inside a chamber.

A further purpose of the invention is to provide automatic flushing of the filter by reverse flushing without need tor dismantling and consuming too little water when filter reaches a certain rate of contamination.

Another purpose of the invention is to provide automatic discharge of air occurring in the filter by means of air discharge deice.

A further purpose of the invention is to reduce operation labour in cleaning of particulates in the water.

In order to achieve purposes described above and given under detailed description, the invention relates to a filtering system used in any pool filtrations, filtration of taps or building entrance hat and cold use water, filtration of city water before osmosis filtering devices, filtration of heating and cooling mechanical plant systems, filtration of cooling water in hydro-electric power plants according to claim 1 and characterized by comprising
- filter chamber located in vertical position,
- a filter located in filter chamber center and providing filtration of particulates,
- particulate collection chamber located under filter and providing accumulation of filtered particulates,
- inlet line located vertically to filter centre in order to provide inlet of water to be filtered to flow to filter chamber in a manner from top to downward,
- vortex cap located on end inlet line having water outlet and providing downward flow of water entering system from inlet line inside the filter,
- outlet line associated to filter chamber and providing discharge of filtered water filled into filter chamber after passing through filter and leaving system.

The structural and characteristic features and all advantages of the invention will be understood better in the figures given below and the detailed description by reference to the figures. Therefore, the assessment should be made based on the figures and taking into account the detailed descriptions.

### Brief Description of the Drawings

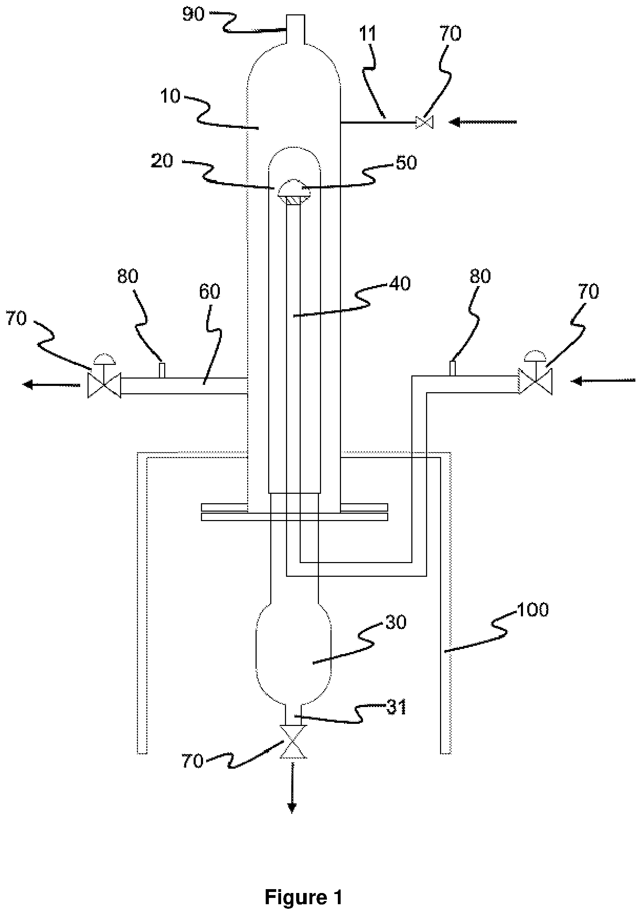

Figure 1 is illustrative view of filtering system of the invention.

### Description of Part References

10. Fiiter ehamber
11. Flushing water inlet
20. Filter
30. Particulate accumulation chamber
31. Flushing water outlet
40. inlet line
50. Vortex cap
60. Outlet line
70. Engine valve
80. Differential pressure sensor
90. Automatic air discharge device
100. Foot

### Detailed Description of the Invention

Figure 1 shows illustrative view of filtering system of the invention. Accordingly, in the most basic form, the filtering system comprises filter chamber (1O) located in vertical position on a foot (100), a filter (20) located in filter chamber (1O) center and providing filtration of particulates, particulate accumulation chamber (30) located under the filter (20) and providing accumulation of filtered particulates, an inlet line (40) vertically located in filter (20) center in order to provide entrance of water to be filtered into the system, vortex cap (50) located on end of water outlet of inlet line (40), an outlet line (60) associated to filter chamber (1O) and providing discharge of filtered water from the system, an engine valve (70) located on water inlet line (40) and outlet line (60) at flushing water outlet (31) at lower end of particulat accumulation chamber (30) at flushing water inlet (11) on the filter chamber (1O) in order to provide control of inlet-outlet of water to be filtered in the system and flushing water, a differential pressure sensor (80) connected onto inlet line (40) and outlet line (60) and measuring pressure in the system and turning on/off the engine valves (70), an automatic air discharge device (90) connected to filter chamber (1O) and discharging the air inside the filter chamber (10).

Filter chamber (10) forming main embodiment of the filtering system is located on a foot (100) in vertical axis. Filter chamber (1O) has flushing water inlet (11).

Filer chamber (10) centre has a filter (20) providing filtration of particulates.

A particulate accumulation chamber (30) providing accumulation of filtered particulates and having a flush water outlet (31) at the lower and is located under the filter (20). The flush water outlet (31) provides exit from particulate accumulation chamber (30), of water entering through flush water inlet (11) on the fiiter ehamber (1O) in order to provide reverse flush of particulate accumulation chamber (30).

Inlet line (40) providing inlet of water to be filtered in the use area of filtering system, is located vertical position to filter (20) centre. Vortex cap (50) is provided on the end provided inside filter (20) of inlet line (40) providing entrance of water to be filtered into the system. Vortex cap (50) provides flow of water from inlet line (40) downward inside the filter (20).

Outlet line (60) is connected to fiiter ehamber (1O) in order to provide exit of filtered water from system through filter (20).

Engine valve (70) is connected to flushing water inlet (11) on fiiter ehamber (10) and flush water outlet (31) on lower end of particulate accumulation ehamber (30) to provide control of inlet-outlet of flush water in the system and also onto water inlet line (40) and outlet line (60) to provide control of inlet and outlet of water to be filtered in the system.

Differential pressure sensor (80) is connected to measure pressure of system onto inlet line (40) and outlet line (60) to provide turning on/off of engine valves (70) in order to provide flushing of filter (20) and particulate accumulation chamber (30) by reverse flushing and provide display of pollution rate of the filter (20).

Filter chamber (10) is connected to automatic air discharge device (90) providing discharge of air therein.

Working principle of filtering system of the invention is as follow;

Engine valve (70) connected to water inlet line (40) and outlet line (60) is in open position during water flowing in the filtering system. Water entering through inlet line (40) hits the vortex cap (50) on end of water inlet line (40) and flows downward inside the filter (20). During downward flowing of the water inside filter (20), vortex occurs inside filter (20) depending on flow rate of water and filling of water into filter chamber (1O) from down to upwards is provided by means of providing flow of water through filter (20) by reducing pressure on filter (20) surface.

The particulates remaining inside the filter (20) during filling of water into filter chamber (10) after passing through filter (20) moves towards particulate accumulation chamber (30) and accumulate in the particulate accumulation chamber (30). Filtered water exits through exit line (60) connected to fiiter chamber (10).

After use of filtering system tor a fixed time period, pressure in the system is measured by differential pressure sensors (80) on inlet line (40) and outlet line (60) as per pollution of filter (20). When pollution level of the filter (20) reaches a fixed level, differential pressure sensors (80) shut down the engine valves (70) connected to inlet line (40) and outlet line (60). Then they open engine valves (70) located on flush water inlet (11) and flush water outlet (31). Reverse flushing is performed by water entering through flush water inlet (11) and exiting from flush water outlet (31) on lower end of particulate accumulation chamber (30). Flush water is discharged from flush water outlet (31) together with the particulates in the particulate accumulation chamber (30) and thus filtering system is cleaned.

Air forming in the system during cleaning operation is discharged through automatic air discharge device (90).

## Claims

1. A filtering system **characterized in** comprising
- A filter chamber (10) located in a vertical position and connected to automatic air discharge device (90) providing discharge of air therein,
- a filter (20) located in the filter chamber (10) centre and providing filtration of particulates,
- particulate accumulation chamber (30) located under filter (20) and providing accumulation of filtered particulates,
- a flushing water outlet (31) located on the lower end of the particulate accumulation chamber (30), and where the water entering through the flushing water inlet (11) is discharged from the lower end of the particulate accumulation chamber (30) thereby cleaning the filtering system,
- an inlet line (40) located vertically to filter (20) centre in order to provide an inlet of water to be filtered to flow to filter chamber (10) in a manner from top to downward,
- a vortex cap (50) located on the end of inlet line (40) having water outlet and providing a downward flow of water entering the system from inlet line (40) inside the filter (20),
- an outlet line (60) associated to filter chamber (10) and providing discharge of filtered water filled into filter chamber (10) after passing through the filter (20) and leaving the system,
- a differential pressure sensor (80) located on the inlet line (40) and outlet line (60) to provide turning on/off engine valves (70) in order to provide flushing of the filter (20) and particulate accumulation chamber (30) by reverse flushing and provide display of pollution rate of the filter (20),an automatic air discharge device (90) connected to the filter chamber (10) and providing discharge of the air inside the filter chamber (10).

2. The filtering system according to claim 1, **characterized in** comprising an engine valve (70) connected to the inlet line (40) and outlet line (60) and providing control of the entrance and exit of water to be filtered in the system.

3. The filtering system according to claim 1, **characterized in** comprising an engine valve (70) located on water inlet line (40) and outlet line (60) at flushing water outlet (31) at lower end of particulate accumulation chamber (30) at flushing water inlet (11) on the filter chamber (10).

4. The filtering system according to claim 1, **characterized in** comprising an inlet line (40) providing formation of the vortex by water hitting the vortex cap (50) and entering the system by vertical location to the filter (20) center and flowing from up to downward inside filter (20) and passing through the filter (20) and filling into filter chamber (10) from down to upward.

5. The filtering system according to claim 1, **characterized in** comprising a foot (100) located under the filter chamber (10) and providing positioning of filter chamber (10) in a vertical position.

## Patentansprüche

1. Filtersystem, **dadurch gekennzeichnet, dass** es umfasst:
- eine vertikal angeordnete Filterkammer (10), die mit einer automatischen Entlüftungsvorrichtung (90) verbunden ist, welche das Ablassen der darin befindlichen Luft ermöglicht,
- einen im Zentrum der Filterkammer (10) angeordneten Filter (20), der die Filtration von Partikeln ermöglicht,
- eine unterhalb des Filters (20) angeordnete Partikelansammelkammer (30), welche die Ansammlung der herausgefilterten Partikel ermöglicht,
- einen Spülwasserauslass (31), der am unteren Ende der Partikelansammelkammer (30) angeordnet ist und durch den das über einen Spülwassereinlass (11) eintretende Wasser am unteren Ende der Partikelansammelkammer (30) abgeführt wird, wodurch das Filtersystem gereinigt wird,
- eine Einlassleitung (40), die vertikal zum Zentrum des Filters (20) angeordnet ist, um zu ermöglichen, dass das zu filternde Wasser von oben nach unten in die Filterkammer (10) strömt,
- eine Wirbelkappe (50), die an dem einen Wasserauslass aufweisenden Ende der Einlassleitung (40) angeordnet ist und eine Abwärtsströmung des über die Einlassleitung (40) in das System eintretenden Wassers innerhalb des Filters (20) ermöglicht,
- eine mit der Filterkammer (10) verbundene Auslassleitung (60), welche das Abführen des gefilterten Wassers ermöglicht, das nach dem Durchströmen des Filters (20) die Filterkammer (10) füllt und das System verlässt,
- einen an der Einlassleitung (40) und der Auslassleitung (60) angeordneten Differenzdrucksensor (80), der das Ein- und Ausschalten von Motorventilen (70) ermöglicht, um den Filter (20) und die Partikelansammelkammer (30) durch Rückspülung zu spülen und den Verschmutzungsgrad des Filters (20) anzuzeigen,
- eine mit der Filterkammer (10) verbundene automatische Entlüftungsvorrichtung (90), welche das Ablassen der Luft innerhalb der Filterkammer (10) ermöglicht.

2. Filtersystem nach Anspruch 1, **dadurch gekennzeichnet, dass** es ein mit der Einlassleitung (40) und der Auslassleitung (60) verbundenes Motorventil (70) umfasst, welches die Steuerung des Eintritts und Austritts des in dem System zu filternden Wassers ermöglicht.

3. Filtersystem nach Anspruch 1, **dadurch gekennzeichnet, dass** es ein Motorventil (70) umfasst, das an der Wassereinlassleitung (40), an der Auslassleitung (60), an dem Spülwasserauslass (31) am unteren Ende der Partikelansammelkammer (30) und an dem Spülwassereinlass (11) an der Filterkammer (10) angeordnet ist.

4. Filtersystem nach Anspruch 1, **dadurch gekennzeichnet, dass** es eine Einlassleitung (40) umfasst, welche die Bildung eines Wirbels dadurch ermöglicht, dass das Wasser auf die Wirbelkappe (50) trifft, wobei das Wasser aufgrund der vertikalen Anordnung der Einlassleitung (40) zum Zentrum des Filters (20) in das System eintritt, innerhalb des Filters (20) von oben nach unten strömt, den Filter (20) durchströmt und die Filterkammer (10) von unten nach oben füllt.

5. Filtersystem nach Anspruch 1, **dadurch gekennzeichnet, dass** es einen unterhalb der Filterkammer (10) angeordneten Fuß (100) umfasst, welcher die Positionierung der Filterkammer (10) in einer vertikalen Position ermöglicht.

## Revendications

1. Système de filtration, **caractérisé en ce qu'**il comprend :
- une chambre de filtration (10) disposée en position verticale et reliée à un dispositif automatique d'évacuation d'air (90) permettant l'évacuation de l'air présent à l'intérieur de celle-ci,
- un filtre (20) disposé au centre de la chambre de filtration (10) et permettant la filtration des particules,
- une chambre d'accumulation de particules (30) disposée sous le filtre (20) et permettant l'accumulation des particules filtrées,
- une sortie d'eau de rinçage (31) disposée à l'extrémité inférieure de la chambre d'accumulation de particules (30), par laquelle l'eau entrant par une entrée d'eau de rinçage (11) est évacuée depuis l'extrémité inférieure de la chambre d'accumulation de particules (30), nettoyant ainsi le système de filtration,
- une conduite d'entrée (40) disposée verticalement par rapport au centre du filtre (20), de manière à permettre à l'eau à filtrer de s'écouler dans la chambre de filtration (10) du haut vers le bas,
- un capuchon générateur de vortex (50) disposé à l'extrémité de la conduite d'entrée (40) comportant une sortie d'eau et permettant un écoulement vers le bas, à l'intérieur du filtre (20), de l'eau entrant dans le système par la conduite d'entrée (40),
- une conduite de sortie (60) associée à la chambre de filtration (10) et permettant l'évacuation de l'eau filtrée qui remplit la chambre de filtration (10) après avoir traversé le filtre (20) et qui quitte le système,
- un capteur de pression différentielle (80) disposé sur la conduite d'entrée (40) et la conduite de sortie (60), permettant l'activation et la désactivation de vannes motorisées (70) afin d'assurer le rinçage du filtre (20) et de la chambre d'accumulation de particules (30) par contre-lavage et de permettre l'affichage du taux d'encrassement du filtre (20),
- un dispositif automatique d'évacuation d'air (90) relié à la chambre de filtration (10) et permettant l'évacuation de l'air présent à l'intérieur de la chambre de filtration (10).

2. Système de filtration selon la revendication 1, **caractérisé en ce qu'**il comprend une vanne motorisée (70) reliée à la conduite d'entrée (40) et à la conduite de sortie (60), permettant de commander l'entrée et la sortie de l'eau à filtrer dans le système.

3. Système de filtration selon la revendication 1, **caractérisé en ce qu'**il comprend une vanne motorisée (70) disposée sur la conduite d'entrée d'eau (40), sur la conduite de sortie (60), au niveau de la sortie d'eau de rinçage (31) située à l'extrémité inférieure de la chambre d'accumulation de particules (30), et au niveau de l'entrée d'eau de rinçage (11) située sur la chambre de filtration (10).

4. Système de filtration selon la revendication 1, **caractérisé en ce qu'**il comprend une conduite d'entrée (40) permettant la formation d'un vortex lorsque l'eau frappe le capuchon générateur de vortex (50), l'eau entrant dans le système en raison de la disposition verticale de la conduite d'entrée (40) par rapport au centre du filtre (20), s'écoulant du haut vers le bas à l'intérieur du filtre (20), traversant le filtre (20) et remplissant la chambre de filtration (10) du bas vers le haut.

5. Système de filtration selon la revendication 1, **caractérisé en ce qu'**il comprend un pied (100) disposé sous la chambre de filtration (10) et permettant le positionnement de la chambre de filtration (10) en position verticale.
